Europäisches Patentamt

European Patent Office

Office européen des brevets

(11) Publication number : **0 470 800 A1**

(12) # EUROPEAN PATENT APPLICATION

(21) Application number : **91307190.8**

(51) Int. Cl.⁵ : **H04N 13/04, H04N 15/00**

(22) Date of filing : **05.08.91**

(30) Priority : **06.08.90 US 563374**

(43) Date of publication of application :
**12.02.92 Bulletin 92/07**

(84) Designated Contracting States :
**DE ES FR GB IT NL**

(71) Applicant : **TEXAS INSTRUMENTS
INCORPORATED
13500 North Central Expressway
Dallas Texas 75265 (US)**

(72) Inventor : **Gylys-Colwell, Frederick D.
4337 15th Avenue N.E.
Seattle, WA 98105 (US)**

Inventor : **Hatch, Gregory A.
6617 Greenwich Lane
Dallas, TX 75230 (US)**
Inventor : **Spry, Larry W.
Deceased (US)**
Inventor : **Gylys, Vytas B.
2521 Big Horn Lane
Richardson, TX 75080 (US)**
Inventor : **Fisher, Thomas D.
8555 Steeplechase Drive
Roswell GA 30076-3593 (US)**
Inventor : **Hammons, Charles B.
710 Scottish Mist Trail
Highland Village, TX 75067 (US)**

(74) Representative : **Blanco White, Henry Nicholas
et al
ABEL & IMRAY Northumberland House
303-306 High Holborn
London WC1V 7LH (GB)**

(54) **Volume display development system.**

(57)    A volume display development system and method for projecting one or more light or laser beam onto a moving volume display surface is provided. The system generates a plurality of data points (41) which collectively compose an image. The amount of angular displacement of the light or laser beam in two directions is determined (42) in order to project the plurality of data points on the moving volume display surface. The system determines the timing of the light or laser beam for projecting the data points (43, 44) on the moving volume display surface in response to the rate of movement thereof, and the data points are projected on the moving volume display surface (410) in response to the determined angular displacement and timing.

EP 0 470 800 A1

FIG. 4

TECHNICAL FIELD OF THE INVENTION

This invention relates in general to the field of image display systems. More particularly, the present invention relates to a volume display development system.

RELATED APPLICATIONS

All of the following patent applications are cross-referenced to one another, and all have been assigned to Texas Instruments, Incorporated. These applications have been concurrently filed and are hereby incorporated in this patent application by reference.

**Attorney Docket #**

TI-15405    A System and Method for Support and Rotation of an Object, Patent Application Serial Number 563,180;

TI-15406    Linear Stepper Motor Design and Method of Operation, Patent Application Serial Number 563,238;

TI-15407    Apparatus and Method for Volume Graphics Display, Patent Application Serial Number 563,372;

TI-15408    Volume Display Development System, Patent Application Serial Number 563,374; and

TI-15409    Volume Display Optical System and Method, Patent Application Serial Number 563,370.

BAGKGROUND OF THE INVENTION

Systems exist which modulate and/or scan a beam, such as a laser beam, and then project the scanned beam onto a screen. Examples of such display systems are described in Baker Patent Nos. 3,471,641 and 3,549,800.

There are also existing systems which provide a three dimensional display. Prior systems for creating such a display have involved moving a flat plate mirror or flexing a plastic mirror to reflect a CRT image in order to create a volume display. Similar techniques have employed a Mylar membrane stretched over a metal ring and silvered on the surface, such mirror being vibrated to reflect the information displayed on the CRT in synchronism with the mirror motion. Such techniques, and techniques for converting a cathode ray tube two dimensional display into a three dimensional image, are discussed in the article "Terminal Puts 3-Dimensional Graphics on Solid Ground", by Harry S. Stover, Electronics, July 28, 1961.

The subject of related patent applications enumerated above achieves volume display by means of a rotating disk. Portions of the disk extend to a level above the center point of the disk and portions thereof extend to a level below the center point of the disk. In spinning the disk about its center axis, a cylindrical volume bound by the outer edges of the disk is created. By projecting points of light onto the rotating disk surface synchronously with the rate of rotation thereof, three dimensional images that can be viewed from all directions above the disk can be generated.

However, because of the peculiar surface geometry and the rotation rate of the disk, the task of generating the points to be projected onto the spinning disk to produce meaningful display images is not trivial.

Accordingly, a need has arisen for a volume display development system that can map arbitrary points in the (x,y,z) domain into points that may be projected onto the surface of the rotating disk to generate a volume display.

A need has also arisen for a means of displaying the mapped and scheduled points on a conventional two dimensional screen to simulate a volume display.

## SUMMARY OF THE INVENTION

In accordance with the present invention, a volume display development system and method are provided which substantially eliminate or reduce disadvantages and problems associated with prior systems.

In one aspect of the present invention, a volume display development system and method for projecting one or more light or laser beams onto a moving volume display surface is provided. The system generates a plurality of data points which collectively compose an image. The amount of angular displacement of the light or laser beam in two directions is determined in order to project the plurality of data points on the moving volume display surface. The system determines the timing of the light or laser beam for projecting the data points on the moving volume display surface in response to the rate of movement thereof, and the data points are projected on the moving volume display surface in response to the determined angular displacement and timing.

In another aspect of the present invention, a volume display development system for projecting at least one laser beam onto a moving volume display surface comprises means for generating a plurality of data points, where the data points are in rectangular coordinates and the plurality of data points collectively composing an image. Further included are means for receiving the plurality of data points and converting the rectangular coordinate representation to a coordinate system describing the amount of angular displacement of the laser beam. Means are also provided for determining the timing of the laser beam for projecting the data points on the moving volume display surface in response to the rate of movement thereof, and for projecting the data points on the moving volume display surface in response to the angular displacement and determined timing.

In yet another aspect of the present invention, a volume display development method for projecting a light beam onto a moving volume display surface is provided. The method comprises the steps of generating a plurality of data points, the data points collectively composing an image and receiving the plurality of data points and determining the amount of angular displacement of the light beam to project the plurality of data points on the moving volume display surface. The timing of the light beam for projecting the data points on the moving volume display surface is then determined in response to the rate of movement thereof and the data points are projected on the moving volume display surface in response to the determined angular displacement and timing.

In yet another aspect of the present invention, there is provided a volume display development method for projecting at least one laser beam onto a moving volume display surface. The method comprises the steps of generating a plurality of data points, where the data points having rectangular coordinates and the plurality of data points collectively composing an image. The plurality of data points are received and converted from the rectangular coordinate representation to a coordinate method describing the amount of angular displacement of the laser beam, and then the timing of the laser beam for projecting the data points onto the moving volume display surface is determined in response to the rate of movement thereof. The data points are then projected onto the moving volume display surface in response to the angular displacement and determined timing.

An important technical advantage of the present invention provides for a volume display development system which converts arbitrary points in the (x,y,z) domain into points that may be projected onto the surface of the rotating disk to generate a volume display.

Another important technical advantage of the present invention provides for a system and method of displaying the points on a conventional two dimensional screen to simulate a volume display.

## BRIEF DESCRIPTION OF THE DRAWINGS

For a better understanding of the present invention, reference may be made to the accompanying drawings, in which:

FIG. 1 is a block diagram of a volume display graphics system;
FIG. 2 is a diagram illustrating computational parameters of laser beam positioning;
FIG. 3 is a side view of an exemplary display surface geometry;
FIG. 4 is a flowchart illustrating the present invention; and
FIG. 5 is an illustration of the concept of time groups and route scheduling.

## DETAILED DESCRIPTION OF THE INVENTION

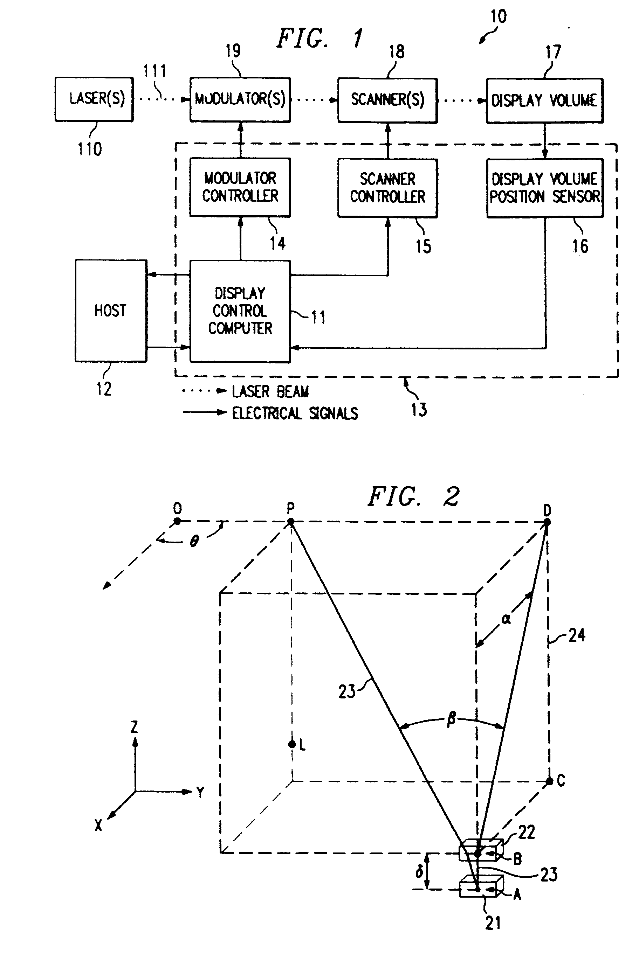

With reference to the drawings, FIG. 1 illustrates the apparatus for volume graphics display, indicated generally at 10. A host computer system 12 is coupled to a graphics processing system 13. Graphics processing system 13 includes several components, including a display control computer 11, which is coupled to a modulator controller 14 and a scanner controller 15.

Modulator controller 14 is further coupled to a modulator 19, and scanner controller 15 is coupled to a scanner 18. A laser 110 is positioned so that the laser beam 111 emitted therefrom passes through modulator 19 and scanner 18 and is projected onto a three dimensional display volume 17. A dis-play volume position sensor 16 is coupled to display volume 17 and display control computer 11. In the preferred embodiment of the present invention, the volume display development system 10 of the present invention resides in host computer 12. For further details on apparatus for volume graphics display 10, please refer to a related patent application titled

Apparatus and Method for Volume Graphics Display.

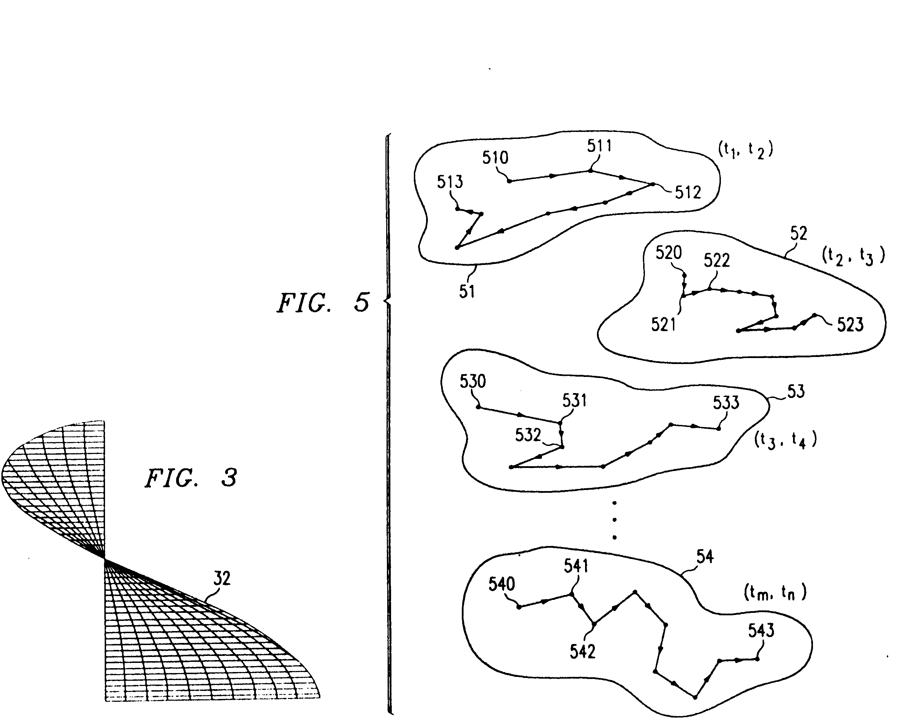

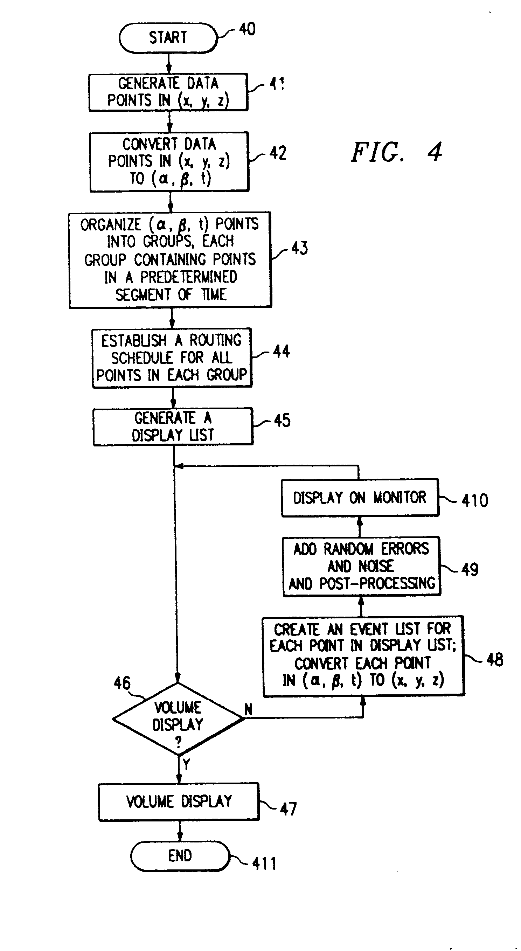

Referring to FIG. 2, a diagram showing the derivation of some important computational parameters of laser positioning is provided. Center points A and B of scanner crystals 21 and 22 are positioned on a Z axis and distance $\delta$ apart. Scanner crystal 21 is adapted to deflect laser beam 23 in the Y direction and scanner crystal 22 is adapted to deflect laser beam 23 in the X direction to allow laser beam 23 to strike the display volume surface (FIG. 3) at a point P. Therefore, angle $\alpha$ is the angle of deflection in the X axis and angle $\beta$ is the angle of deflection in the Y axis. Furthermore, an imaginary rectangle 24 may be used to illustrate the boundary reachable by laser beam 23.

To compute for angles $\alpha$ and $\beta$, the following formulas may be used:

$$\alpha = \text{ARCTAN} \frac{\text{distance}(B,C)}{\text{distance}(C,D)} \text{, and}$$

$$\beta = \text{ARCTAN} \frac{\text{distance}(D,P)}{\delta + \text{distance}(C,D)}$$

where C and D are points displaced from point B on the X and Y axes, respectively.

To compute for time t, the following formula may be used:

$$t = \frac{1}{\omega} \left( \frac{\text{distance }(P,L)}{K} - \theta \right)$$

where $\theta$ is the angle between the center of disk 32 (point 0) and P, $\omega$ is the rotational speed of disk 32, L is the lowest point on disk 32, and K is a constant dependent on the total height of disk 32.

Referring to FIG. 3, a side view of an exemplary display surface geometry is shown. A disk 32, as shown in FIG. 3, has a helical surface geometry that, when disk 32 is rotated about its center axis, provides a three dimensional display surface. Note that in this manner the vertical displacement of the strikable disk surface becomes dependent on the rotational speed of disk 32. The manner in which disk 32 may be supported and rotated is disclosed in a related patent application titled A System and Method for Support and Rotation of an Object.

FIG. 4 shows a flowchart establishing the sequence of action that may be used to develop and generate a volume display. Beginning in block 40 and proceeding to block 41, a set of data points are generated, each point having (x,y,z) rectangular coordinates. The set of data points are points in the (x,y,z) domain that would compose an image. The image may be as simple as a geometric shape, such as a sphere or cube, or complex, such as a fighter plane or a topographical globe. A series of timed images may also be generated to produce animation. In addition, associated with each data point may be two tangential vectors indicative of the relationship between each data point and the surface of the image. The use of the vectors is discussed below.

In order to facilitate the generation of data points in the (x,y,z) domain, a library of sets of data points representing common shapes and objects may be prepared in advance, from which data points of a desired shape may be retrieved and further manipulated to achieve the final image. Also provided may be functions which display a set of data points on a monitor screen and enable a user to perform modifications of retrieved images, such as scaling the dimensions thereof, rotating, moving, stretching in a direction, etc. The mathematical computational tool involved in such manipulations is the transformation matrix, as described in Fundamentals of Interactive Computer Graphics by J. D. Foley and A. Van Dam. The tool by which the images may be displayed on a monitor screen may be implemented with the X Window System, an industry standard graphics windowing system for workstations developed by the Massachusetts Institute of Technology.

After an image in the form of data points in (x,y,z) coordinates is created, the data points are converted or mapped into another domain, as shown in block 42. The converted data points are represented by $(\alpha,\beta,t)$ coordinates, where $\alpha$ and $\beta$ are angles describing the amount of deflection of laser beam 23 (FIG. 2) in the X and Y axes as described in FIG. 2, and t is time with respect to the rotational speed of disk 32 (FIG. 3).

Subsequently in block 43, the data points are organized or sorted into groups according to the t (time) value of the points, where each group is characterized by a predetermined segment of time. This may be illustrated by referring to FIG. 5, where: group 51 contains data points 510-513 having the value of the t-coordinate between $t_1$ and $t_2$; group 52 contains data points 520-523 having t (time) between $t_2$ and $t_3$; group 53 contains

data points 530-533 having t (time) between $t_3$ and $t_4$; and group 54 contains data points 540-543 having the value of the t-coordinate between $t_m$ and $t_n$.

Once all the data points in an image or scene are divided into groups according to time, the next step is to compute a schedule that specifies the order the points in each time group are to be illuminated in order to reconstruct the scene, as shown in block 44. This schedule must provide the minimum amount of deflection of the laser beam in the $\alpha$ and $\beta$ axes as the intersection point of the laser beam and display surface travels from point to point, as shown in FIG. 5. This scheduling requirement is established so that all points in each group may be illuminated within predetermined segments of time.

Interestingly, the scheduling problem is that of the classic traveling salesman problem, where a salesman is to travel from city to city via the most cost efficient route while not traversing any portion of the route twice. Because the complete solution of a traveling salesman problem is too prohibitive to solve, a number of known algorithms may be used to compute a suboptimal route. One such algorithm is the simulated annealing method, which is described in detail in a number of references, such as Simulated Annealing: Theory and Applications by P.J.M. van Laarhoven and E.H.L. Aarts, and Numerical Recipes by W.H. Press, B.P. Flannery, S.A. Teukolsky and W.T. Vetterling, incorporated herein by reference.

An alternative method which can be used to determine the most efficient routing schedule for all points in a time group is the minimum spanning tree algorithm. A number of available references describe this method, such as Algorithms by R. Sedgewick and "Computer Solutions of the Traveling Salesman Problem," published in The Bell System Technical Journal in December, 1965 and authored by Shen Lin. The foregoing are also incorporated herein by reference.

Returning to block 44 of FIG. 4, it may be possible that, during the scheduling process, it is discovered that two or more points congregate so closely that they require illumination at substantially the same time. Because of the physical constraints of the laser hardware, this is not possible. The scheduling process may "move" one or all of the conflicting points along its tangential vectors, so that all the points may be illuminated without disrupting the image. After having established a suboptimal travel route between the data points in each time group, a display list is generated, as shown in block 45. The display list contains groups of data points in the $(\alpha,\beta,t)$ domain in order of increasing time. Additionally, the data points in each time group are arranged in accordance with the established route or schedule. Proceeding to block 46, a determination is made as to whether volume display is desired at this time. If volume display is selected, then the display list is made available to graphics processing system 13, which generates a volume display of the points in the display list in display volume 17, as shown in block 47. Details of this process may be referred to in a related patent application titled Volume Display Graphics System.

On the other hand, if a simulation of the volume display is desired, execution proceeds to block 48 where an event list is created. An event list is used to model the actions that would have taken place in an actual volume display. For each data point in the display list, there is associated therewith one or more actions or events. For example, in order to illuminate a point, scanner 18 must be fed proper input signals as to deflect laser beam 110 in the $\alpha$ and $\beta$ coordinates to the proper position on the display surface, assuming proper timing. Then the laser source is turned on to illuminate the point. Thereafter, the laser source is turned off as the point has been illuminated. Therefore, an event list is formed by linking the events associated with each point in the display list. As each data point is processed in this fashion, the coordinated system thereof is converted back to the (x,y,z) domain.

Proceeding to block 49, some form of post processing is applied to the data in the event list to introduce effects of noise and random errors in the optical and/or electronic hardware. Noise and random error approximation methods are known in the art and will not be discussed herein.

The data points in the (x,y,z) domain in the event list are thereafter displayed on a conventional monitor screen (not shown), as shown in block 410. Graphics display tools are known in the art and may be implemented with the X Windows System as described above. Upon viewing the image or scene on the monitor screen, discrepancies and errors may be detected and corrected. In addition, the image may be modified until satisfactory. Data points of the adjusted image may then be generated and program execution may begin again at block 42.

After displaying the image on the monitor screen as shown in block 410, execution returns to block 46 where a determination may be made as to whether volume display of the simulated points is desired. Execution may terminate in block 411 after volume display.

In the preferred embodiment of the present invention, hash marks are generated from the data points in the (x,y,z) domain generated in block 41. Hash marks are "elongated" points where the laser is left on for a predetermined amount of time. Within each hash mark, modulator 19 may be used to vary the intensity of the laser beam in order to create the effect of shading or shadowing. Implemented in this manner, the displayed image will have a substantially better volume effect.

## Preferred Embodiment Features

Various important features of the preferred embodiment are summarized below.

A volume display development system for projecting a light beam onto a moving volume display surface is shown with means for generating a plurality of data points, the data points collectively composing an image, means for receiving the plurality of data points and determining the amount of angular displacement of the light beam to project the plurality of data points on the moving volume display surface, means for determining the timing of the light beam for projecting the data points on the moving volume display surface in response to the rate of movement thereof, and means for projecting the data points on the moving volume display surface in response to the determined angular displacement and timing. The timing determining means may also include means for assigning the plurality of data points to a plurality of timing groups, each group having data points with projection time in a predetermined range, means for computing an efficient path from data point to data point in each timing group, and means for generating a display list having the timing groups of data points ordered by assigned time, and the data points within each timing group ordered in response to the computed path. The path computing means further computes a path reaching each data point in each timing group only once and no portion of the path may be repeated. The display list generating means further generates a display list comprising a sequence of sets of angular values, each set of angular values describes the amount of angular displacement of each light beam to illuminate one data point. The data point generating means may further include means for generating two tangential vectors associated with each data point and the timing determining means may further include means for modifying one or more data points along the tangential vectors in response to the data points being too close to one another. The system may also include means for simulating the volume display on a two dimensional monitor, wherein such simulating means includes means for creating an event list, the event list describing events to take place to project the plurality of data points, means for modeling random error and noise to simulate hardware errors, and means for displaying the simulated volume display on the two dimensional monitor. The event list creating means of such means for simulating includes means for determining the events, including displacement in one or two directions, turning on the light beam, and turning off the light beam, and may further include means for modifying the simulated volume display. Moreover, the system shown includes library means for storing data points of images, the data points of a stored image retrievable, means for displaying the retrieved data points as an image on a two dimensional monitor screen, and means for manipulating the displayed image to form a modified image of the stored image. The manipulating means in this case includes means for rotating the displayed image, means for stretching the displayed image in any direction, means for moving the displayed image, and means for adding to and subtracting from the displayed image, as well as further including means for modifying the plurality of data points correlative to the displayed image manipulations. The light beam of the system consists of a laser beam, although it may additionally comprise multi-colored laser beams. Additionally, the plurality of data point gathering means generates the points represented in rectangular coordinates, and the system additionally includes means for converting the data points in rectangular coordinates to data points in angular coordinates and time.

A volume display development method for projecting at least one laser beam onto a moving volume display surface is shown including the steps of generating a plurality of data points, the data points having rectangular coordinates and the plurality of data points collectively composing an image, receiving the plurality of data points and converting the rectangular coordinate representation to a coordinate method describing the amount of angular displacement of the laser beam, determining the timing of the laser beam for projecting the data points on the moving volume display surface in response to the rate of movement thereof, and projecting the data points on the moving volume display surface in response to the angular displacement and determined timing. The timing determining step further includes the steps of assigning the plurality of data points to a plurality of timing groups, each group having data points with projection time in a predetermined range, computing an efficient path from data point to data point in each timing group, and generating a display list having the timing groups of data points ordered by assigned time, and the data points within each timing group ordered in response to the computed path, wherein the path computing step further computes a path reaching each data point in each timing group only once and no portion of the path may be repeated. The display list generating step further generates a display list comprising a sequence of sets of angular values, each set of angular values describes the amount of angular displacement of the laser beam to illuminate one data point. The data point generating step further includes the step of generating two tangential vectors associated with each data point and the timing determining step further includes the step of modifying one or more data points, along the tangential vectors in response to the data points being too close to one another.

Additionally, the method comprises the step of simulating the volume display on a two dimensional monitor, which simulating step includes the further steps of creating an event list, the event list describing events to take place to project the plurality of data points, modeling random error and noise to simulate hardware errors, and

7

displaying the simulated volume display on the two dimensional monitor. The event list creating step of the step of simulating includes the step of determining the events, which include displacement in one or two directions, turning on the laser beam, and turning off the laser beam, as well as further comprising the step of modifying the simulated volume display. Moreover, the method further comprises the steps of storing data points of images, the data points of a stored image retrievable, displaying the retrieved data points as an image on a two dimensional monitor screen, and manipulating the displayed image to form a modified image of the stored image, wherein the manipulating step comprises the further steps of rotating the displayed image, stretching the displayed image in any direction, moving the displayed image, and adding to and subtracting from the displayed image. Such method further comprises the step of modifying the plurality of data points correlative to the displayed image manipulations. The method shown further comprises the step of projecting multi-colored laser beams to form multi-colored images on the volume display surface.

Although the present invention has been described in detail, it should be understood that various changes, substitutions and alterations can be made hereto without departing from the spirit and scope of the present invention as defined by the appended claims.

## Claims

1. A volume display development system for projecting at least one laser beam onto a moving volume display surface, comprising:

    means for generating a plurality of data points, said data points having rectangular coordinates and said plurality of data points collectively composing an image;

    means for receiving said plurality of data points and converting said rectangular coordinate representation to a coordinate system describing the amount of angular displacement of said laser beam;

    means for determining the timing of said laser beam for projecting said data points on said moving volume display surface in response to the rate of movement thereof; and

    means for projecting said data points on said moving volume display surface in response to said angular displacement and determined timing.

2. The system, as set forth in claim 1, wherein said timing determining means further comprises:

    means for assigning said plurality of data points to a plurality of timing groups, each said group having data points with projection time in a predetermined range;

    means for computing an efficient path from data point to data point in each timing group; and

    means for generating a display list having said timing groups of data points ordered by assigned time, and said data points within each timing group ordered in response to said computed path.

3. The system, as set forth in claim 2, wherein said path computing means further computes a path reaching each data point in each timing group only once and no portion of said path may be repeated.

4. The system, as set forth in claim 2, wherein said display list generating means further generates a display list comprising a sequence of sets of angular values, each set of angular values describes the amount of angular displacement of said laser beam to illuminate one data point.

5. The system, as set forth in claim 1, further comprising means for simulating said volume display on a two dimensional monitor.

6. The system, as set forth in claim 5, wherein said simulating means comprises:

    means for creating an event list, said event list describing events to take place to project said plurality of data points;

    means for modeling random error and noise to simulate hardware errors; and

    means for displaying said simulated volume display on said two dimensional monitor.

7. The system, as set forth in claim 6, wherein said event list creating means includes means for determining said events, including displacement in one or two directions, turning on said laser beam, and turning off said laser beam.

8. The system, as set forth in claim 1, further comprising:

    library means for storing data points of images, said data points of a stored image retrievable;

means for displaying said retrieved data points as an image on a two dimensional monitor screen; and

means for manipulating said displayed image to form a modified image of said stored image.

9. The system, as set forth in claim 8, wherein said manipulating means comprises:
means for rotating said displayed image;
means for stretching said displayed image in any direction;
means for moving said displayed image; and
means for adding to and subtracting from said displayed image.

10. The system, as set forth in claim 9, further comprising means for modifying said plurality of data points correlative to said displayed image manipulations.

11. The system, as set forth in claim 10, further comprising multi-colored laser beams.

12. A volume display development method for projecting a light beam onto a moving volume display surface, the method comprising the steps of:
generating a plurality of data points, said data points collectively composing an image;
receiving said plurality of data points and determining the amount of angular displacement of said light beam to project said plurality of data points on said moving volume display surface;
determining the timing of said light beam for projecting said data points on said moving volume display surface in response to the rate of movement thereof; and
projecting said data points on said moving volume display surface in response to said determined angular displacement and timing.

13. The method, as set forth in claim 12, wherein said timing determining step further comprises the steps of:
assigning said plurality of data points to a plurality of timing groups, each said group having data points with projection time in a predetermined range;
computing an efficient path from data point to data point in each timing group; and
generating a display list having said timing groups of data points ordered by assigned time, and said data points within each timing group ordered in response to said computed path.

14. The method, as set forth in claim 12, wherein said path computing step further computes a path reaching each data point in each timing group only once and no portion of said path may be repeated.

15. The method, as set forth in claim 12, wherein said display list generating step further generates a display list comprising a sequence of sets of angular values, each set of angular values describes the amount of angular displacement of said light beam to illuminate one data point.

16. The method, as set forth in claim 12, wherein said data point generating step further includes the step of generating two tangential vectors associated with each data point.

17. The method, as set forth in claim 16, wherein said timing determining step further includes the step of modifying one or more data points, along said tangential vectors in response to said data points being too close to one another.

18. The method, as set forth in claim 12, further comprising the step of simulating said volume display on a two dimensional monitor.

19. The method, as set forth in claim 18, wherein said simulating step comprises:
creating an event list, said event list describing events to take place to project said plurality of data points;
modeling random error and noise to simulate hardware errors; and
displaying said simulated volume display on said two dimensional monitor.

20. The method, as set forth in claim 19, wherein said event list creating step includes the step of determining said events, which includes displacement in one or two directions, turning on said light beam, and turning off said light beam.

9

21. The method, as set forth in claim 19, further comprising the step of modifying said simulated volume display.

22. The method, as set forth in claim 12, further comprising the steps of:
storing data points of previously constructed images; retrieving said data points of a stored image; displaying said retrieved data points as an image on a two dimensional monitor screen; and manipulating said displayed image to construct a modified image of said stored image.

23. The method, as set forth in claim 22, wherein said manipulating step comprises the steps of:
rotating said displayed image;
stretching said displayed image in any direction;
moving said displayed image; and
adding to and subtracting from said displayed image.

24. The method, as set forth in claim 23, further comprising the step of modifying said plurality of data points correlative to said displayed image manipulations.

25. The method, as set forth in claim 12, wherein said plurality of data point generating step generates said points represented in rectangular coordinates, and said method further comprises the step of converting said data points in rectangular coordinates to data points in angular coordinates and time.

*FIG. 1*

```
LASER(S)  · · · ·>  MODULATOR(S)  · · · ·>  SCANNER(S)  · · · ·>  DISPLAY VOLUME
```

19  111  18  17  10

110

MODULATOR CONTROLLER      SCANNER CONTROLLER      DISPLAY VOLUME POSITION SENSOR

14  15  16

HOST      DISPLAY CONTROL COMPUTER

12  11  13

· · · ·> LASER BEAM

——> ELECTRICAL SIGNALS

*FIG. 2*

FIG. 5

FIG. 3

START — 40

GENERATE DATA
POINTS IN (x, y, z) — 41

CONVERT DATA
POINTS IN (x, y, z)
TO (α, β, t) — 42

*FIG. 4*

ORGANIZE (α, β, t) POINTS
INTO GROUPS, EACH
GROUP CONTAINING POINTS
IN A PREDETERMINED
SEGMENT OF TIME — 43

ESTABLISH A ROUTING
SCHEDULE FOR ALL
POINTS IN EACH GROUP — 44

GENERATE A
DISPLAY LIST — 45

DISPLAY ON MONITOR — 410

ADD RANDOM ERRORS
AND NOISE
AND POST-PROCESSING — 49

CREATE AN EVENT LIST FOR
EACH POINT IN DISPLAY LIST;
CONVERT EACH POINT
IN (α, β, t) TO (x, y, z) — 48

46 — VOLUME DISPLAY ? — N

Y

VOLUME DISPLAY — 47

END — 411

**European Patent Office**

**EUROPEAN SEARCH REPORT**

Application Number

EP 91307190.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US - A - 4 871 231 (GARCIA) * Abstract; fig. 1 * | 1,11, 12 | H 04 N 13/04 H 04 N 15/00 |
| A | EP - A2 - 0 310 928 (TEXAS INSTRUMENTS) * Abstract; fig. 2 * | 1,12 | |
| A | US - A - 4 922 336 (MORTON) * Abstract; fig. 1; column 6, line 17 - column 10, line 7 * | 1,12 | |
| A | US - A - 3 569 988 (SCHMIDT) * Fig. 1-3; column 2, line 43 - column 3, line 28 * | 1,11, 12 | |
| A | US - A - 4 763 280 (ROBINSON) * Abstract; fig. 1 * | 1,12 | TECHNICAL FIELDS SEARCHED (Int. Cl.5) H 04 N 9/00 H 04 N 13/00 H 04 N 15/00 G 02 B 27/00 G 06 F 15/00 |

The present search report has been drawn up for all claims

| Place of search | Date of completion of the search | Examiner |
|---|---|---|
| VIENNA | 22-10-1991 | BENISCHKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)